# EUROPEAN PATENT APPLICATION

(11) **EP 4 711 033 A1**
(43) Date of publication of application: **18.03.2026**
(21) Application number: 24199875.6
(22) Date of filing: 11.09.2024
(51) Int. Cl.: B01F 27/271, B01F 27/81, B01F 27/86, B01F 35/50, G01N 1/38, G01N 21/00, G01N 21/51, G01N 21/82

(54) **PROCESS FOR HIGH STRESS LIQUID MIXING**

(71) Applicant: Prosperodes GmbH, 38124 Braunschweig (DE)
(72) Inventor: Ritter, Dr., Christiane, Braunschweig (DE); Lührs, Dr., Thorsten, Braunschweig (DE)
(74) Representative: Taruttis, Stefan Georg

(57) **Abstract**

A process for imparting stress on a liquid contained in a closed housing (1) by circulating the total volume of the liquid intermittently. The total volume of the liquid is circulated through the housing volume, the circulating including accelerating the liquid within an accelerating volume section of the housing, after passage of the liquid through the accelerating volume section passing the liquid through static passages within the housing, the liquid fraction filling the static passages as a passage volume, adjacent the static passages, passing the liquid between a rotor (10) and spaced-apart stators (21,22), and returning the liquid to the accelerating volume section until the entire liquid volume has moved through the accelerating volume section at least once, preferably at least two times, wherein the stress generated in the accelerating volume section encompasses a range of intensities. The acceleration and the circulating movement of the liquid is driven by the rotor rotating between the stators.

## Description

The present invention relates to a process for high stress mixing a liquid in order to impart a pre-determined level of high, preferentially turbulent, stress on the liquid. In the process the total volume of the liquid is enclosed in a housing and a small volume fraction of the liquid is subjected to high stress in a small volume section within the housing, while the remaining large volume fraction of the liquid is moved such that the total volume is moved through the large volume section within the housing under significantly lower stress, e.g. with little or essentially no stress. According to the invention, the liquid in the small volume section is subjected to a range of intensities of stress.

In the process, the total volume of liquid is moved through the housing volume by rotating a rotor, resulting in the generation of high stress within a volume fraction of the liquid adjacent the rotor, resulting in control of the stress by controlling the speed of rotation of the rotor, e.g. expressed as its rotation rate.

### State of the art

WO 2016/001334 A1 describes analysing the aggregation of prion protein by exerting a highly homogenous shearing force that is generated in the annular gap between a cylindrical rotor driven in a cylindrical stator, which gap is circumferentially closed and forms one continuous passage for liquid between the rotor and the stator. The rotor is arranged on a shaft that is driven by a drive coupled by a magnetic coupling.

Buchholz S, Zempel H. The six brain-specific TAU isoforms and their role in Alzheimer's disease and related neurodegenerative dementia syndromes. Alzheimers Dement. 2024 May;20(5):3606-3628. doi: 10.1002/alz. 13784. Epub 2024 Mar 31. PMID: 38556838; PMCID: PMC11095451. describes isoforms of human tau proteins.

Wang Y, Garg S, Mandelkow EM, Mandelkow E. Proteolytic processing of tau. Biochem Soc Trans. 2010 Aug;38(4):955-61. doi: 10.1042BST0380955. PMID: 20658984. describes tau isoforms that occur by proteolytic processing.

### Object of the invention

It is an object of the present invention to provide an alternative process suitable for analysing the aggregation of prion protein under the influence of mechanical stress. Preferably, the process shall avoid the generation of a homogenous shear force, e.g. avoid generating a shear force that differs by at most 20% or at most 10% from one shear force value. Preferably, the process shall be set up for generating non-homogenous intense stress onto a liquid, e.g. turbulent stress over a range of intensities.

### Description of the invention

The invention achieves the object by the features of the claims and especially provides a process for imparting stress on a liquid contained in a closed housing by circulating the total volume of the liquid intermittently, e.g. in periods of accelerating the liquid as stressing phases separated by periods of resting phases, in which the liquid is not accelerated nor moved. In an embodiment, the liquid is slowly agitated, e.g. for a short period of time only or continuously, for avoiding diffusion limitation of compounds, e.g. of aggregated and/or of native protein, e.g. native prion protein, during a resting phase. The total volume of the liquid is circulated, e.g. as adjacent volume fractions of the liquid, through the housing volume, the circulating including accelerating the liquid within an accelerating volume section of the housing, after passage of the liquid through the accelerating volume section passing the liquid through static passages within the housing, the liquid fraction filling the static passages as a passage volume, adjacent the static passages, also referred to as passage volume, passing the liquid between a rotor and spaced-apart stators, and returning the liquid to the accelerating volume section until the entire liquid volume has moved through the accelerating volume section at least once, preferably at least two times, wherein the stress generated in the accelerating volume section encompasses a range of intensities. The acceleration and the circulating movement of the liquid is driven by the rotor rotating between the stators. The liquid volume fraction between the rotor and the stators is also referred to as pump volume. The stress intensity range from lowest to highest intensity preferably encompasses stress intensities that vary by a factor of at least 5. Therein, the stress intensity can e.g. be determined as turbulence values. Herein, stress intensity includes turbulence as well as laminar stress, preferably together determined as Von-Mises-Stress. When rotating the rotor, the liquid volume is driven by and moved through the pump volume, moved through the adjacent accelerating volume section and moved through the adjacent passage volume which returns the liquid to the pump volume. As an example, the pump volume can comprise 20 to 30%, e.g. 25% of the total liquid volume, the accelerating volume section can comprise or consist of only 0.5 to 1%, e.g. 0.6 to 0.8%, e.g. 0.7% of the total liquid volume, and the passage volume can comprise the remainder volume to 100%, e.g. 69% to 79.5% of the total liquid volume. The total liquid volume preferably fills the housing volume up to a constriction, more preferably extends beyond a constriction and into an escape volume adjacent to the constriction, which constriction opposite the bottom covers the cross-section of the inner volume of the housing with a spacing from the upper or first stator and with a spacing from the disc shaft, e.g. is spaced by an annular gap from the disc shaft. Accordingly, the escape volume at the constriction borders on the total liquid volume, and for the purpose of the invention the escape volume is provided in addition to the total liquid volume.

The rotor can be driven e.g. from 20 up to 1000 rps (rotations per second), e.g. up to 750 rps for generating stress at high intensity.

According to the invention, the process during a stressing phase within the accelerating volume section of the housing provides for imparting stress onto the liquid by passing continuous volume fractions of the liquid through the accelerating volume section, which stress encompasses an intensity range covering intensities that vary by a factor of at least 5, e.g. from lowest to highest intensity. The stress at least in part is caused by turbulence extending along the accelerating volume section and into adjacent static passages, optionally by turbulence extending only along the accelerating volume section, and the turbulence includes sub-sections which have stress levels covering the intensity range. The intensity range of the stress generated in the accelerating volume section in the liquid covers intensities, e.g. between lowest and highest stress intensity, that vary by a factor of at least 5, preferably by a factor of at least 7, more preferably by a factor of at least 8 or by a factor of at least 9 or at least 10. The lowest stress intensity generated in the accelerating volume section can be the same stress intensity as the mean stress exerted in the passage volume, preferably the lowest stress intensity corresponds to a stress intensity observed across the total reaction volume. An upper limit of the range of the stress intensity, which can easily be determined, is e.g. one or more of internal heat generation, e.g. due to turbulence, mechanical stability of the housing, maximum rotation speed of the rotor disc, abrasion of the rotor disc in the liquid, and/or stability, resp. fragility of compounds contained in a liquid sample, e.g. fragility of prion protein aggregates. Preferably, the upper limit of the range of the stress intensity is higher than the lowest stress intensity by a factor of 100, by a factor of 95, by a factor of 90, by a factor of 85, by a factor of 80, by a factor of 75, by a factor of 70 or by a factor of 65, with any intermediate value, which preferably is an integral number.

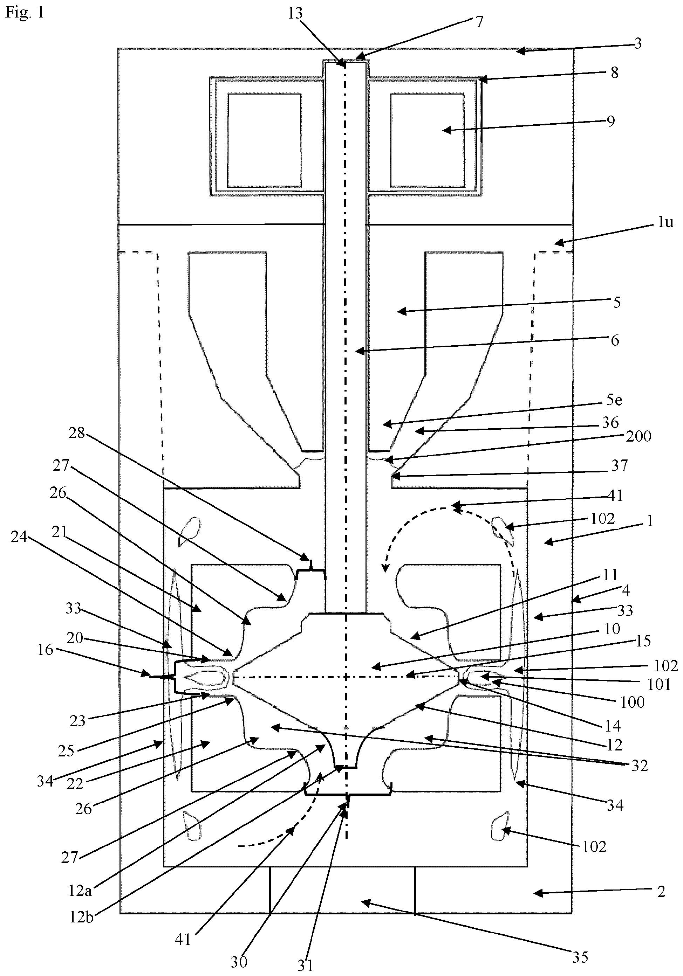

Computational fluid dynamics (CFD) simulations have been performed for multiple variants and geometries of the liquid contained, including multiple geometries of rotating disc-shaped rotors over a range of rotation speeds and temperatures. For an embodiment closely similar to the one shown in Figure 1, rotation speeds of 50 rps to 750 rps were simulated at temperatures between 15°C and 37°C. Taking advantage of the liquid volume symmetry about the vertical axis, only one quarter of the volume was simulated using periodic boundaries. The simulated liquid volume was subdivided into 2.5 . 10⁶ finite elements, where the resulting lattice was a hybrid lattice with block-structured regions (hexahedron) and unstructured (tetrahedron) elements. As a high 'Reynolds Number Model', the RNG model (RNG: Renormalization Group Theory) was used for the simulation, which takes laminar effects into account. The Turbulent Viscosity Ratio (TVR) is the ratio of the calculated between the calculated "turbulent (apparent) viscosity" to the molecular viscosity. The ratio can be regarded as an indicator of the degree of turbulence, where TVR values of 100 or more would be considered fully turbulent. From the combination of turbulent stress and laminar stress, the "Von-Mises-Stress" (VMS) was calculated yielding the overall stress exerted onto the liquid in each volume element of the simulations.

The simulation of the geometry similar to the one shown in Fig. 1 at 250 rps and at 25 °C showed an average stress (VMS) of 4.6 Pa over the entire liquid volume. In the vicinity of the circumferential edge of the rotor disc extending to the static passage, the average VMS was 96 Pa, where the maximum VMS was approx. 213 Pa. Notably, the observed TVR was maximal in the static passage with values around 42, whereas the typical value was <<10 for most of the volume, including the circumferential edge of the rotating disc. The highest velocities of the liquid were observed at the circumference of the disc with approx. 4 m/sec. In the static passage the velocity was around 1.2 m/sec, whereas in most of the volume it was less than 0.25 m/sec. The relative pressure was observed to be < 525 Pa in all volume elements, so that no cavitation effects had to be considered. As a summary, the maximum stress (VMS) and turbulence (TVR) were observed in the static passage adjacent to the rotating disc, this volume section covering only a small fraction of the total volume. This observation was true for all rotation speeds of the disc and temperatures tested in this scheme. Conversely, most of the volume contained very low stress (VMS) and very low turbulence (TVR).

In the simulation, the air volume in the escape volume and the liquid volume that extend into the escape volume were included. As intended by the design, a clear separation of the air/liquid phases was observed. Moreover, the overall mass transport within the liquid volume was analysed: the first passage and the second passage (see Fig. 1) showed a mass transport of 0.715 g/sec and of 0.708 g/sec, respectively, demonstrating the efficiency of the device for the efficient and symmetrical mixing of all elements of the liquid.

The accelerating volume section of the housing is preferably provided by a rotor which is a rotating disc, e.g. by the circumferential edge of the disc and a first disc surface extending from the circumferential edge to a disc shaft and opposite the first disc surface a second disc surface extending from the circumferential edge of the disc, wherein the disc is arranged with a spacing from a radial passage extending in the plane of the circumferential edge of the disc, wherein the radial passage is e.g. provided by the spacing of portions of the stators, preferably by the spacing of a first projection of the first stator from a second projection of the second stator. The accelerating volume section may extend from the circumferential edge of the rotor through the radial passage up to a housing wall which is opposite to the circumferential rotor edge, or the accelerating volume section may extend only from the circumferential rotor edge and through the radial passage. Generally, the rotating disc is also referred to as a rotating rotor. The rotating disc accelerates the liquid in a radial direction into the radial passage. Preferably, the static passages adjacent to the accelerating volume section, e.g. adjacent to the radial passage, and opposite to the rotor are perpendicular to the accelerating volume section. Generally, it is preferred to impose a re-direction onto the liquid exiting the accelerating volume section, e.g. a re-direction by 75° to 130°, preferably 80 to 100°, e.g. 90°, in order to increase turbulence and/or to impinge liquid after flowing through the radial passage onto a wall that delimits the radial passage, for increasing turbulence.

The accelerating volume section preferably includes less than 1%, more preferred less than 0.9%, less than 0.8%, less than 0.7% or less than 0.6% of the total volume of the housing and/or of the total volume of the liquid. Therein, the passages which are connected to the accelerating volume section include the remaining volume up to 100% of the total liquid volume. The total liquid volume may e.g. be 25 to 1000 µL, e.g. 50 or 75µL or 100µL, in each case e.g. up to 1000 µL or up to 750µL or up to 500µL or up to 250µL or up to 200µL.

Preferably, the stress imparted on the liquid passing through the accelerating volume section is 50 to 100% of the maximum stress generated, while in the passages outside the accelerating volume section the stress is at maximum 50%, e.g. 10 to 50% of the maximum stress which is e.g. calculated for one rotation rate of the rotor disc. Generally, for calculating the turbulence viscosity ratio, e.g. for calculating the stress intensity as Von-Mises-stress, the viscosity is the dynamic viscosity of the liquid at the temperature of the liquid, the calculation considers the liquid as a Newtonian fluid.

The radial passage is generally formed between a first projection of a first stator that is arranged with a first interspace from the first disc surface and a second projection of a second stator that is arranged with a second interspace from the second disc surface, which radial passage opposite the rotor disc is connected to a first peripheral passage formed between the first stator and the housing and connected to a second peripheral passage formed between the second stator and the housing, wherein the first peripheral passage is connected to the first interspace and the second peripheral passage is connected to the second interspace for circulating liquid that exits the radial passage towards the accelerating volume section. The static passages may comprise or consist of the first peripheral passage and the adjacent second peripheral passage.

Generally preferable, the process comprises an initial step of providing a device as described herein, introducing a volume of the liquid into the housing of the device and closing the housing with a lid or with an upper section of the housing, wherein the liquid volume is preferably pre-determined to fill the entire volume of the device up to the constriction, the liquid extending into the escape volume, with a portion of the escape volume being filled with gas, such that an interface between the liquid and the gas is arranged only within the escape volume, driving the rotor to rotate and, during or subsequent to rotating the rotor, irradiating light into the device and receiving light exiting the device, wherein preferably light irradiated into the device and light exiting the device is transmitted through an optically transparent window of the bottom of the housing. Preferably, light exiting the device is used for measuring light scatter, turbidity, fluorescence, absorbance, or at least two of these.

The process preferably comprises or consists of repetitions of cycles, each cycle having a stressing phase of rotating the rotor for generating a range of intensities of stress in the liquid volume, followed by a resting phase in which the rotor may be standing still, preferably a resting phase in which the rotor is rotated at a low rate for mixing the liquid. The low rate of rotating the rotor can e.g. be controlled to essentially generate laminar flow, optionally with little or no turbulence in the static passages, preferably only laminar flow within the accelerating volume section, e.g. at a rotation rate of at maximum 10%, preferably of at maximum 9% or of at maximum 8% or of at maximum 7% or of at maximum 6% or of at maximum 5% or of at maximum 4% or of at maximum 3% or of at maximum 2% or of at maximum 1% of the rotation rate of the stressing phase. The rate of rotation during the stressing phase can e.g. be at least 50 rps (rotations per second), e.g. up to 1000 rps, up to 800 rps, up to 750 rps, up to 700 rps, e.g. up to 500 rps, up to 300 rps or up to 250 rps or up to 125 rps in each case.

It has been found that mixing at a low rate, e.g. 10 rps or 20 rps, in each case up to 40 rps or up to 50 rps or below, e.g. during a resting phase, can prevent diffusion limitation of formation of aggregated state prion protein from native prion protein. In contrast, it could be observed that at least for some species of prion proteins, the rate of the aggregation from native conformation prion protein to aggregated state prion protein is limited by the rate of diffusion e.g. of the native prion protein towards larger aggregated state prion protein. In the process of the invention, the generation of the range of stress intensities in the liquid passing through the accelerating volume section during the stressing phase results in fragmentation of aggregated state prion protein, and further aggregation of native prion protein with fragments of the aggregated state prion protein occurs in the resting phase. Optical measurement, e.g. including irradiating light through an optically transparent window and receiving scattered light through the window, can be during each phase of a cycle, e.g. during the stressing phase, preferably during the resting phase, during mixing or during a purely static phase, e.g. absence of agitation of the liquid.

A device suitable for use in the process of the invention in detail comprises or consists of a housing which contains one rotor disc, rotationally symmetrical arranged on a disc shaft having an axis of rotation, the disc having a first disc surface extending from the disc shaft to the circumferential disc edge and opposite the first disc surface having a second disc surface extending from the circumferential disc edge to the centre of the second disc surface or, in an alternative embodiment, extending from the circumferential disc edge to the disc shaft projecting over the second surface,
a first stator arranged with a spacing from the disc, e.g. from the first disc surface, the first stator having a first projection which extends into a greater radius from the axis of rotation, respectively from the disc shaft, than the disc, wherein optionally the first projection, especially its first edge, is arranged in a radius from the axis of rotation that is greater than the radius of the disc, or the first projection of the first stator extends over a portion of the first disc surface and in its first projection, especially in its first edge, extends over the circumferential edge of the disc into a smaller radius from the axis of rotation, respectively from the disc shaft, than the disc, wherein the first stator is spaced from the disc shaft forming a first passage for liquid to pass into a first interspace formed by the spacing of the first stator from the disc,
a second stator arranged with a spacing from the disc, e.g. from the second disc surface, and opposite from the first stator, the second stator extending over a portion of the second disc surface, the second stator having a second projection which extends into a greater radius from the axis of rotation than the disc, wherein optionally the second projection, especially its first edge, is arranged in a radius from the axis of rotation that is greater than the radius of the disc, or the second projection of the second stator extends over a portion of the second disc surface and in its second projection, especially in its first edge, extends over the circumferential edge of the disc into a smaller radius from the axis of rotation than the disc, the second stator having a central opening forming a second passage for liquid to pass into the second interspace formed by the spacing of the second stator from the disc,
with a spacing between the first projection of the first stator and the second projection of the second stator, the first projection and the second projection between them forming a radial passage connected to the first interspace and connected to the second interspace, wherein optionally the first projection and the second projection are arranged at equal distances from the median of the circumferential disc edge.

The peripheral passage that is arranged between the first stator and the housing connects the radial passage with the first passage, and the peripheral passage that is arranged between the second stator and the housing connects the radial passage with the second passage, wherein each peripheral passage is formed by a spacing of one or both of the stators from the housing.

Optionally, the first projection and the second projection are arranged at different distances from the median of the circumferential rotor edge, resulting in liquid entering the radial passage which is arranged with an offset from the median of the circumferential rotor edge, resulting in the liquid entering the radial passage with an offset from the median of the circumferential rotor edge. Alternatively, the first projection and the second projection are arranged at the same distance from the median of the circumferential rotor edge, resulting in liquid entering the radial passage which is arranged at the median of the circumferential rotor edge, resulting in the liquid entering the radial passage at the median of the circumferential rotor edge.

Preferably, the housing, the first stator, the second stator, and the disc are made of plastics, optionally the same or a different one. The disc shaft preferably is a round metal rod, or a round plastic rod.

Optionally, the first projection and the second projection can have surfaces which are parallel to one another, or which with increasing distance from the disc are arranged at a smaller distance, with increasing distance from the disc resulting in tapering of the liquid flowing through the radial passage, or which with increasing distance from the disc are arranged at a larger distance, with increasing distance from the disc resulting in a diverging liquid flowing through the radial passage.

Optionally, for controlled reduction of the turbulence in liquid exiting the accelerating volume section, the first projection and the second projection may be connected by webs extending across the radial passage, the webs forming radial flow channels. The second stator can be positioned and connected, e.g. by clamping, to the housing by webs extending between the housing and the second stator. The first stator can be positioned and connected, e.g. by clamping, to the housing by webs extending between the housing and the first stator.

It is preferred that the first stator at the smallest radius of its first projection and on its surface facing the disc has a first edge which is the surface fraction that is arranged with the smallest spacing from the disc. The surface of the first stator facing the disc, and adjacent to its first edge is arranged at a greater spacing from the disc. Optionally, in order to increase mixing of the liquid while flowing through the first interspace, adjacent to its first edge the surface of the first stator facing the disc may be concave, e.g. have an annular recess facing the disc, which recess opposite the first edge borders on a second edge of the first stator which second edge is spaced from the disc and from the disc shaft to form the first passage. The second edge is the portion of the first stator that is arranged with the smallest spacing from the disc shaft. The annular recess of the first stator is arranged at a larger spacing from the disc than the first edge and at a larger spacing from the disc than the second edge, and the annular recess may form a mixing zone for liquid such that liquid in the pump volume is subjected to mixing between the annular recess and the disc.

It is preferred that the second stator at the smallest radius of its first projection and on its surface facing the disc has a first edge which is the surface fraction that is arranged with the smallest spacing from the disc. The surface of the first stator facing the disc, and adjacent to its first edge is arranged at a greater spacing from the disc. Optionally, in order to increase mixing of the liquid while flowing through the second interspace, adjacent to its first edge the surface of the second stator facing the disc may be concave, e.g. have an annular recess facing the disc, which recess opposite the first edge borders on a second edge of the second stator which second edge is spaced from the disc and from the central opening, which forms the second passage. The annular recess of the second stator is arranged at a larger spacing from the disc than the first edge and at a larger spacing from the disc than the second edge. Accordingly, in the pump volume, one or both of the first interspace and the second interspace may form a mixing zone for liquid.

Optionally, the first edge of the first stator and the first edge of the second stator are arranged at the same distance from the disc, and further optionally, a recess of the first stator facing the disc and a recess of the second stator facing the disc may have the same shape and same distance from the disc.

The first surface of the disc adjacent to the disc shaft may have an annular section that is perpendicular to the disc shaft, with an adjacent surface section having a greater radius that tapers towards the circumferential edge.

The circumferential edge of the disc preferably is circular, e.g. rotationally symmetric and without protrusions or recesses. The circumferential edge of the disc may be a ring surface, which can be cylindrical or convex or concave, or the circumferential edge may be sharp-edged. The first disc surface may be continuous or with steps, sharp-edged, round-edged or bevelled.

Generally, at least in a small distance from the disc shaft, the first disc surface extending to the circumferential edge may taper towards the circumferential edge, e.g. frustrum-shaped, convexly curved or concavely curved, and/or the first disc surface may have an annular section that is e.g. rotationally symmetrical to the disc shaft, e.g. a flat ring section, and/or at least one annular section bulging over an adjacent annular section, and/or at least one annular section that is recessed from an adjacent annular section.

The second disc surface extending to the circumferential edge may taper towards the circumferential edge, e.g. frustrum-shaped, convexly curved or concavely curved, and/or the second disc surface may have an annular section that is perpendicular to the disc shaft, e.g. a flat ring section, and/or at least one annular section bulging over an adjacent annular section, and/or at least one annular section that is recessed from an adjacent annular section.

The second disc surface may differ from the first disc surface in order to increase turbulence within the accelerating volume section by generating different flow speeds along the disc surfaces, or the second disc surface may be symmetrical to the first disc surface along a median plane of the disc that is perpendicular to the disc shaft.

For optical measurement it is preferred to irradiate light, e.g. of an excitation wavelength, e.g. having a wavelength of 200 to 950 nm, e.g. a wavelength of 400 to 700 nm, through the bottom of the housing and to measure light exiting the housing through this bottom. Accordingly, the bottom of the housing preferably contains an optically transparent window to allow for transmission of light having an excitation wavelength and for transmission of light having a longer wavelength emitted by a component of the liquid present within the housing. The window may be transparent e.g. for wavelengths 200 to 950 nm, e.g. wavelengths 400 to 700 nm. The window may be an inset in the bottom of the housing or the window may form the bottom of the housing. The window may be of glass, e.g. quartz glass, or of plastics. For the optical measurement only through the bottom of the housing, it is preferred to direct light that is irradiated onto the second surface of the disc is directed away from the window, e.g. reflected from the second surface of the disc towards the second stator and/or to a housing portion outside the window arranged in the bottom. Accordingly, the second disc surface preferably tapers to a central projection, e.g. to a central tip or projecting central surface, such that the tapering surface and the central projection extend across the opening of the second stator. The tapering surface may taper conically, preferably tapers curvedly and/or non-linearly, e.g. tapers concavely with respect to a projected conical surface extending between the circumferential edge of the rotor and the central projection. The tapering of the second disc surface at least in a section that extends across the opening of the second stator has the advantage of guiding incident light that is irradiated onto the disc, e.g is irradiated in parallel to the axis of the rotor, away, e.g. guiding incident light that is directed onto the second rotor surface towards the second stator, such that incident light which is irradiated into the device from its optically transparent window section of the bottom is prevented from being reflected from the second rotor surface towards the optically transparent window section of the bottom. As a result, the tapering of the second disc surface at least in its section that extends across the opening of the second stator is preferred for in a process comprising irradiating light through the optically transparent window section of the bottom and receiving scattered light through the optically transparent window section of the bottom, e.g. for irradiating the inner volume of the device through the optically transparent window section of the bottom and measuring scattered light transmitted through the optically transparent window section of the bottom. Generally, in the process, the housing is arranged with the bottom below the rotor disc, e.g. with the lid covering the drive coupling forming an upper end, preferably with the rotor shaft being arranged vertically.

Generally, it is preferred that both the first disc surface and the second disc surface continuously taper to the circumferential edge, each with a frustrum-shape or rounded convex shape. More preferred, the first disc surface and the second disc surface at least in a radial section adjacent to the circumferential edge are symmetrical to a median plane of the disc, wherein the radial section adjacent to the circumferential edge extends for at least 50%, preferably at least 70% of the radius, determined from the circumferential edge.

In order to keep the liquid enclosed in the housing during the process, the rotor disc is driven by a motor arranged outside the housing, which motor connects to a drive coupling arranged on one end on a disc shaft that shaft is guided in a bearing arranged in the housing. The drive coupling, e.g. a magnetic coupling, is arranged on the end of the disc shaft opposite the disc, and further preferred the end of the disc shaft opposite the disc is run in a terminal bearing, e.g. arranged in a terminal section of the housing, which section may be a lid closing the housing opposite its bottom. The housing preferably is rotationally symmetrical about the disc shaft and extends with a spacing around the first stator and the second stator and has a bottom which with a spacing from the second stator and opposite the disc covers the cross-section of the housing. The housing with a spacing from the first stator and opposite the disc closes its cross-section, with an opening extending around the disc shaft with a spacing, which forms an inlet, preferably an annular gap, e.g. for filling liquid into the housing. In the process, liquid is preferably introduced into the housing to completely fill the void volume of the housing, including the volume between the stators and the disc.

Preferably adjacent the inlet, the housing covers a portion of the cross-section of the housing, e.g. such that the inlet has an open cross-section that is at maximum 30%, preferably at maximum 20% or at maximum 10% of the cross-section of the housing, which cross-section is e.g. determined at the level of the radial passage.

In the process, a volume of liquid is filled into the housing to fill the housing for the liquid to extend over a constriction, which constriction opposite the bottom covers the cross-section of the inner volume with a spacing from the first stator and with a spacing from the disc shaft, e.g. is spaced by an annular gap from the disc shaft, which annular gap preferably is smaller, e.g. by at least 10%, at least 20% or at least 30%, than the first passage formed by the spacing of the second edge of the first stator from the disc shaft. Adjacent the constriction and in fluid connection with the volume formed by the spacing of the first stator from the constriction an escape volume is formed within the housing. Further preferred, the escape volume is formed between the bearing, e.g. a terminal extension of the bearing, and the housing. The escape volume can e.g. have an annular cross-section about the bearing, e.g. about its terminal extension. Generally, it is preferred that the escape volume has an annular cross-section which has a radius that increases with increasing distance from the constriction. In the process, the volume of liquid preferably extends beyond the constriction into a portion of the escape volume, while the remaining portion of the escape volume is filled with gas, e.g. air. This filling volume has the advantage of generating an interface between liquid and gas within the escape volume, which results is avoidance of gas being introduced into the liquid volume which with respect to the constriction is opposite the escape volume, e.g. in the process from the escape volume essentially no air is introduced across the constriction and into the liquid below the constriction. Due to the total liquid volume being separated by a constriction from the escape volume, the interface between liquid and gas is arranged only in the escape volume. Accordingly, the process has the advantage of forming an interface between liquid and gas only in the escape volume, and accordingly the process only generates gas bubbles within liquid in the escape volume, and as a result the process avoids the generation of gas bubbles in the total liquid volume.

Preferably, the liquid is guided in passages by baffles, e.g. by center baffles which extend generally radially to the axis of rotation between the housing and the radial passage, e.g. center baffles adjacent to the opening formed between the first stator and the second stator. Optionally, the center baffles may extend along the first peripheral passage, e.g. between the first stator and the housing to guide liquid in the first peripheral passage, and/or the center baffles may extend along the second peripheral passage, e.g. between the second stator and the housing to guide liquid in the second peripheral passage. Preferably, center baffles are arranged at equal spacings along the cross-section of the housing. For guiding liquid, center baffles can extend across the opening formed between the first stator and the second stator and which border on the housing, and which center baffles extend along both the first peripheral passage formed by the spacing of the first stator from the housing, and along the second passage formed by the spacing of the second stator and the housing.

Preferably, liquid is guided by top baffles that extend between the first stator and the constriction, preferably liquid is guided by top baffles that extend from the first stator to adjacent the constriction, wherein generally preferable the top baffles extend radially to the axis of rotation, e.g. radially from the housing towards the rotor shaft, e.g. with a spacing from the rotor shaft.

Further preferable, the liquid is guided by bottom baffles which extend between the second stator and the bottom of the housing, which bottom baffles extend radially to the axis of rotation.

The process has the advantage of imparting a high mechanical stress on liquid along the edge of the rotor disc and when passing the first projection of the first stator and the second projection of the second stator, thereby imparting high stress within a small volume fraction of the inner volume of the device, respectively within a small volume fraction of the liquid, while liquid when passing through the larger volume formed by the radial passage and peripheral passages and/or by first and second interspaces is mixed without the high mechanical stress, e.g. non-turbulent flow. Accordingly, the process imparts high mechanical stress, e.g. turbulence, onto liquid in a small volume fraction, which is an accelerating volume section of the housing, and the liquid is mixed in a larger volume without high mechanical stress.

Generally herein, especially with reference to the figures, the first stator is interchangeably also referred to as upper stator, and the second stator is interchangeably also referred to as lower stator.

For a liquid containing a prion protein, it was found that mechanical stress results in fragmentation and aggregation of native prion protein, also referred to as amplification of aggretated state prion protein, which amplification is reproduceable and depends on the range of stress intensities, temperature, and number of passages of the liquid through the accelerating volume section. The process of the invention with the same processing parameters, e.g. temperature and intensity range, results in reproducible generation of prion protein.

For the purposes of the invention, prion protein includes any mammalian protein, natural or produced by expression in a cultivated cell, e.g. TDP43, α-synuclein, Aβ, Tau, Scrapie in sheep (cellular prion protein PrP^{c}, major prion protein, accessible at http://www.uniprot.org/uniprot/P23907), bovine spongiform encephalitis in cattle (cellular prion protein PrP^{c}, major prion protein, accessible at http://www.uniprot.org/ uniprot/P 10279), chronic wasting disease in deer and elk (cellular prion protein PrP^{c}, major prion proteins, accessible at black deer: http://www.uniprot.org/uniprot/P47852, red deer: http://www. uniprot.org/uniprot/P67987, alpine musk deer: http://www.uniprot. org/uniprot/Q68G95), and Creutzfeld-Jacob disease, Gerstmann-Sträussler-Scheinker syndrome (cellular prion protein PrP^{c}, including mutant proteins thereof), fatal familial insomnia in humans (prion protein), wherein prion disease in humans, including Creutzfeld Jacob disease, Gerstmann-Sträussler-Scheinker(GSD) Syndrome, fatal familial insomnia (FFI) (major prion protein, accessible at http://www.uniprot.org/uniprot/P04156), GSD and FFI are exclusively associated with familial variants, CJD can be associated with familial variants, Alzheimer disease (amyloid beta, Aβ, especially Aβ of 40 (Aβ40) or 42 (Aβ42) amino acids, including mutant proteins thereof), especially Alzheimer disease or cerebral amyloid angiopathy in humans (beta amyloid (Aβ) A4 protein, accessible at http://www. uniprot. org/uniprot/P05067, especially the partial sequences beta-amyloid protein 42, and beta-amyloid protein 40, and also familial variants of the A4 protein), Alzheimer disease (tau and/or α-synuclein of human, mouse or rat, e.g. human alpha-synuclein accessible at http://www.uniprot.org/uniprot/P37840, mouse alpha-synuclein accessible at http://www.uniprot.org/uniprot/O55042 rat alpha-synuclein accessible at http://www.uniprot.org /uniprot/P37377, human tau, accessible at http://www.uniprot. org/uniprot/P10636 and corresponding tau sequences of mice and rats, accessible at http://www.uniprot.org/uniprot/P35637), Alzheimer in mouse or rat (mouse Aβ accessible at http://www.uniprot.org/uniprot/P12023; rat Aβ accessible at http://www.uniprot.org/ uniprot/P08592, and tau accessible at http://www.uniprot.org/uniprot/P35637 and mouse α-synuclein, accessible at http://www.uniprot.org/uniprot/O55042, rat alpha-synuclein accessible at http://www.uniprot.org /uniprot/P37377), Parkinson (alpha-synuclein) and α-synucleopathies in humans (human alpha-synuclein accessible at http://www.uniprot. org/uniprot/P37840), Parkinson disease and α-synucleopathies in murine disease models (alpha-synuclein accessible at http://www.uniprot.org/uniprot/O55042) and Parkinson disease and synucleopathies in rat disease models (alpha-synuclein accessible at http://www.uniprot. org/uniprot/P37377), frontotemporal lobar dementia (TDP-43, accessible at http://www. uniprot.org/uniprot/Q13148), frontotemporal lobar dementia (tau, accessible at http://www.uniprot. org/uniprot/P10636), and corresponding tau sequences of mice and rats, frontotemporal lobar dementia (FUS, accessible at http://www.uniprot.org/uniprot/P35637), and corresponding FUS sequences of mice and rats, Amyotrophic Lateral Sclerosis (SOD1, accessible at http://www.uniprot.org/uniprot/P00441), Amyotrophic Lateral Sclerosis (TDP-43, accessible at http://www.uniprot.org/uniprot/Q13148), diabetes mellitus type 2 (amylin, accessible at http://www.uniprot.org/uniprot/P10997),), chorea Huntington (human huntingtin accessible at http://www.uniprot.org/ uniprot/P42858, especially containing poly-Q expansions between amino acid sequence position 18 and 38), medullary carcinoma of the thyroid (calcitonin, accessible at http://www.uniprot.org/uniprot/P01258), cardiac arrhythmias, isolated atrial amyloidosis (atrial natriuretic factor, accessible at http://www. uniprot.org/ uniprot/P01160), atherosclerosis (apolipoprotein A, accessible at http://www. uniprot.org/uniprot/P02647), rheumatoid arthritis (serum amyloid A, accessible at http: //www.uniprot.org/uniprot/P0DJI8), aortic medial amyloid (medin, accessible at http://www.uniprot.org/ uniprot/Q08431), prolactinomas (prolactin), familial amyloid polyneuropathy (transthyretin, accessible at http://www.uniprot.org/uniprot/P02766), hereditary non-neuropathic systemic amyloidosis (lysozyme, accessible at http://www. uniprot.org/uniprot/P61626), dialysis related amyloidosis (beta-2-microglobulin, accessible at http://www.uniprot.org/uniprot/P61769), Finnish amyloidosis (gelsolin, accessible at http://www.uniprot.org/uniprot/P06396), lattice corneal dystrophy (keratoepithelin, accessible at http://www.uniprot.org/uniprot/Q15582), cerebral amyloid angiopathy (beta-amyloid), also of the Icelandic type (cystatin, accessible at http://www.uniprot.org/uniprot/P01034), systemic AL amyloidosis (immunoglobulin light chain AL), sporadic inclusion body myositis (S-IBM), tauopathies involving the agglomeration of tau protein (human tau-protein accessible at http://www.uniprot.org/ uniprot/P10636), Tauopathies involving the agglomeration of tau protein in murine disease models (mouse tau-protein accessible at http://www.uniprot.org /uniprot/P10637), Tauopathies involving the agglomeration of tau protein in rat disease models (rat tau-protein accessible at http://www.uniprot.org/ uniprot/P19332)). Herein, tau protein includes isoforms, especially isoforms as described by Barghorn et al. (loc. cit.), human tau23 of 352 amino acids, lacking N-terminal inserts I1 and I2 between E45 and A103 and lacking R2 between V275 and V306, human tau37 of 381 amino acids, lacking N-terminal insert I2 between D74 and A103 and lacking R2 between V275 and V306, human tau39 of 410 amino acids, lacking R2 between V275 and V306, human tau24 of 383 amino acids, lacking N-terminal inserts I1 and I2 between E45 and A103, human tau34 of 412 amino acids, lacking N-terminal insert I2 between D74 and A103, human tau K19 of 98 amino acids containing amino acids Q244 to E372 but lacking R2 between V275 and V306, human tau K18 containing amino acids Q244 to E372, each in comparison to human tau40 of 441 amino acids (human tau isoform F accessible at http://www.uniprot.org/uniprot/P10636#P10636-8).

The invention is now described in greater detail with reference to the figures, which schematically show in
- Fig. 1 a cross-section of a device suitable for performing the process,
- Fig. 2 a cross-section of a device suitable for performing the process,
- Fig. 3 a cross-section of the device of Fig. 1 with a rotational offset about the axis of rotation of the rotor shaft,
- Fig. 4 a cross-section E-E of Fig. 1 and Fig. 3,
- Fig. 5 a cross-section C-C of Fig. 1 and Fig. 3,
- Fig. 6 a cross-section G-G of Fig. 1 and Fig. 3,
- Fig. 7 a cross-section D-D of Fig. 1 and Fig. 3,
- Fig. 8 a cross-section F-F of Fig. 1 and Fig. 3, and
- Fig. 9A-E show results of computer-modelled stress intensities in the total liquid volume and in the acceleration volume.

In the figures, same reference signs refer to functionally identical elements. Elements that are described with reference to the figures are elements of the device and may be combined also as an isolated elements with any element described herein above or in the claims.

Fig. 1 illustrates the process of the invention with reference to a device suitable for use in the process. The device comprises a housing 1 with a bottom 2 and a top end or lid 3 at its opposite end, with side walls 4 connecting the bottom 2 with the top end 3. The housing 1 contains a bearing 5 guiding a disc shaft 6, which at one end is rotatably arranged in a terminal bearing 7 arranged in the top end 3. As preferred, the housing 1 adjacent its top end 3 has a recess 8 for receiving a coupling 9, which recess 8 may be a chamber closed by a lid. The coupling 9 is driven by a drive to rotate the disc shaft 6 and the rotor disc 10 which is arranged on the disc shaft 6 opposite the coupling 9. As preferred, the disc shaft 6 opposite the bearing 5 does not project over the disc 10, such that the disc 10 has a first disc surface 11 enclosing the disc shaft 6 and an opposite second disc surface 12 that is not interrupted by the disc shaft 6. For filling liquid into the housing 1, an upper section 1u of the housing 1 may be separate from the housing 1, and after filling the liquid into the housing 1, the upper section 1u can be arranged at the housing to form the constriction 37 and to push some liquid into the escape volume 36.

When performing the process by rotating the disc 10 with a liquid filled into the housing 1, the housing 1 is preferably arranged such that the liquid does not flow out of the housing 1, e.g. such that the first stator 21 is an upper stator which is arranged above the disc 10 and above the second stator 12 which is a lower stator, wherein the upper stator 21 and the lower stator 220 are spaced from one another and from the disc 10 arranged between the upper and the lower stators.

The first disc surface 11 and the second disc surface 12 from the axis of rotation 13 in a frustrum-shape taper to the circumferential edge 14 of the disc 10.

The disc 10 is rotationally symmetrical to the disc shaft 6, which extends concentrically to the axis of rotation 13.

The circumferential edge 14 lies in a median plane 15 of the disc 10, which median plane 15 is in perpendicular to the axis of rotation. In the median plane 15 a radial passage 16 is formed between a first projection 20 of a first stator 21 and a spaced-apart second projection 23 of a second stator 22. In this exemplary embodiment, the disc 10 at its circumferential edge 14 extends into a radius from the disc shaft 6 in which radius there are arranged a first edge 24 of the first stator 21 and a first edge 25 of the second stator 22. In the housing, it is the first edge 24 of the first stator 21 that is arranged with the smallest spacing from the first disc surface 11, with the other surface sections of the first stator being arranged with a greater spacing from the first disc surface 11 and from the disc shaft 6. In the housing, it is the first edge 25 of the second stator 22 that is arranged with the smallest spacing from the second disc surface 12, with the other surface sections of the second stator being arranged with a greater spacing from the second disc surface 12. Accordingly, the smallest gap for liquid to pass through along the first disc surface 11 is formed between the first disc surface 11 and the first stator 21, especially its first edge 24, and the smallest gap for liquid to pass through along the second disc surface 12 is formed between the second disc surface 12 and the second stator 22, especially its first edge 25.

As the disc 10 when rotating has the greatest speed at its circumferential edge, the most intense mechanical stress or mechanical force and/or turbulence is generated between the first edge 24 of the first stator 21 and the first disc surface 11 as well as between the first edge 25 of the second stator 22 and the second disc surface 12, and within the radial passage 16, which is directly adjacent to the first edge 24 of the first stator 21 and directly adjacent to the first edge 25 of the second stator 22, and preferably directly adjacent to the circumferential edge 14. The flow path formed by the first interspace 29, which is formed between the first stator 21 and the first disc surface 11, including the narrow passage formed between the first edge 24 of the first stator 21 and the first disc surface 11, and the flow path formed by the second interspace 32, which is formed between the second stator 22 and the second disc surface 12, including the narrow passage formed between the first edge 25 of the second stator 22 and the second disc surface 12 are separate flow paths, which merge at the adjacent radial passage 16.

In Fig. 1, the range of stress intensities 100 in the accelerating volume section is depicted as turbulence-viscosity-ratio (TVR) after a computer-model calculated for a disc rotating at 250 rps (equal to rotation at 250 Hz). Adjacent to the circumferential edge 14 of the rotor 10 and within the radial passage 16, the accelerating volume section the range of stress intensities 100 has a core 101 of an intensity of 50 to 100% of the maximum TVR, and, following the flow direction into the first peripheral passage 33 and into the second peripheral passage 34 the range of stress intensities diffuses to an 102 having an intensity of 10 to 50% of the maximum TVR.

Each of the first stator 21 and the second stator 22 may independently have a concave surface that faces the first disc surface 11 and respectively the second disc surface 12. Such a concave surface may be formed by a recess 26 of one or both of the first stator 21 and second stator 22. The surface of the first stator 21 facing the first disc surface 11 is arranged at a smaller radius from the disc shaft 6, respectively from the axis of rotation 13, than its first edge 24. As depicted, a curved, e.g. rounded second edge 27 may form the surface of the first stator 21 which is arranged with the smallest spacing from the disc 10 and from the disc shaft 6.

The spacing of the second edge 27 of the first stator 21 from the disc shaft 6 forms a first passage 28 which connects to the first interspace 29. The opening 30 of the second stator 12 forms a second passage 31 which connects to the second interspace 32.

The first stator 21 is spaced from the housing, forming a first peripheral passage 33 which connects the radial passage 16 to the first passage 28. The second stator 22 is spaced from the housing, forming a second peripheral passage 34 which connects the radial passage 16 to the second passage 31.

The bottom 2 of the housing 1 contains an optically transparent section 35 forming a window which is adapted for transmission of an excitation wavelength and for transmission of an emission wavelength.

As generally preferred, e.g. for use in irradiating light through the optically transparent section forming a window 35 of the bottom 2, more preferred irradiating light approximately perpendicular through the optically transparent window 35, and for measuring scatter light passing out of the device through the optically transparent window 35, the second disc surface 12 has a tapering section 12a which tapers to a central projection 12b, which may be a plane surface, a round surface or a tip.

In the figures, the dashed and curved lines indicate the flow direction 41 of a liquid within the device when rotating the disc 10.

As generally preferred, Fig. 1 shows that opposite the bottom 2 the housing 1 contains a constriction 37 which covers the cross-section of the inner volume with a spacing from the volume formed by its spacing from the first stator 21, and with a spacing from the disc shaft 6, e.g. with an annular gap from the disc shaft 6. Adjacent the constriction 37 and in fluid connection with the volume formed by the spacing of the first stator 21 from the constriction 37 an escape volume 36 is formed within the housing 1. As further preferred, the escape volume 36 is formed between a terminal extension 5e of the bearing 5 and the housing 1. The escape volume 36 shown here has an annular cross-section about the bearing 5, e.g. about its terminal extension 5e, which annular cross-section has a radius that increases with increasing distance from the constriction 37.

It was found that when rotating the disc 10 while the volume of the housing between its bottom 2 and a constriction 37 and at least a section of an escape volume 36 is filled with liquid, essentially no gas bubbles are generated and essentially no gas is drawn from above the filling level into the liquid present between the bottom 2 and the constriction 37. The escape volume 36 is connected to the volume formed by the spacing of the first stator 21 from a constriction 37 of the housing 1, e.g. through the spacing of the constriction 37 from the disc shaft 6. The interface 200 between the liquid filled into the housing 1 and an upper gas volume is arranged only within the escape volume 36.

In the embodiment depicted in Fig. 1, the inner volume of the housing 1 is rotationally symmetric about the axis of rotation 13 of the disc shaft 6.

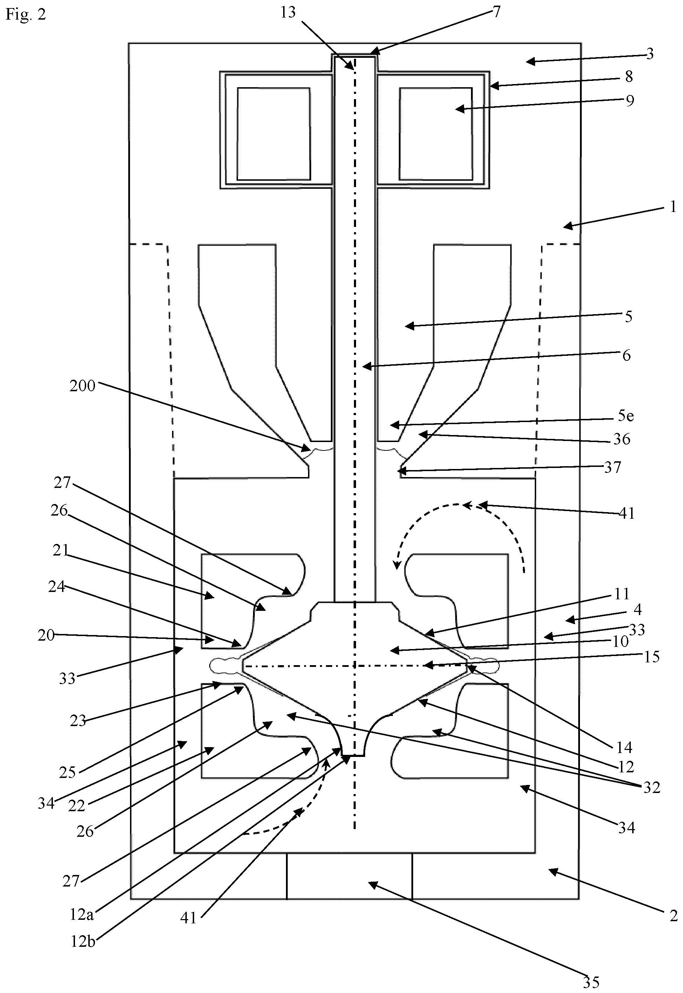

Fig. 2 on the device according to Fig. 1 depicts the range of stress intensities 100 in the accelerating volume section as maximum tension after a computer-model calculated for a disc rotating at 250 rps (equal to rotation at 250 Hz). This liquid dynamics calculation shows that in the accelerating volume section a tension that a range which corresponds to 10x to 70x the average tension within the total liquid volume. The accelerating volume section in which the TVR overlaps with the maximum liquid tension has a volume fraction of at maximum 2% of the total liquid volume.

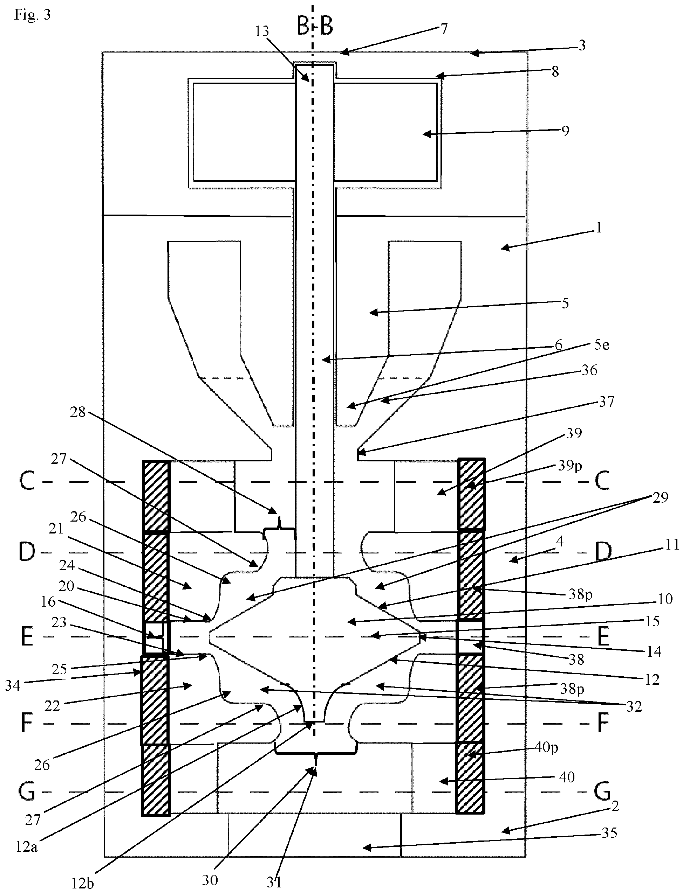

Preferably, the device has a cross-section along the axis of rotation 13 as e.g. shown in Fig. 1 and, with a rotational offset as shown in Fig. 3, a cross-section along the axis of rotation 13, wherein the device has center baffles 38 which extend generally radially to the axis of rotation 13 between the radial passage 16, which is e.g. formed by the opening formed between the first stator 21 and the second stator 22, and the housing 1. Optionally, the center baffles 38 may extend along the first peripheral passage 33, e.g. between the first stator 21 and the housing 1, and/or the center baffles 38 may extend across the second peripheral passage 34, e.g. between the second stator 22 and the housing. Preferably, center baffles 38 are arranged at equal spacings along the cross-section of the housing 1. An embodiment of a device having center baffles 38 that extend across the opening formed between the first stator 21 and the second stator 22 and which border on the housing 1, and which center baffles 38 extend along both the first peripheral passage formed by the spacing of the first stator 21 from the housing 1, and along the second passage formed by the spacing of the second stator 22 and the housing 1. Fig. 3 depicts a cross-section through preferred center baffles 38 along the axis of rotation 13.

In Fig. 3, the portion of top baffles 39 crossing the first peripheral passage 33 and extending to the housing 1 are depicted as top baffle portions 39p, the portion of bottom baffles 40 crossing the second peripheral passage 34 and extending to the housing 1 are depicted as bottom baffle portions 40p, and the portion of center baffles 38 extending between the first stator 21 and the housing 1 are depicted as center baffle portions 38p, and also the portion of center baffles 38 extending between the second stator 22 and the housing 1 are depicted as center baffle portions 38p.

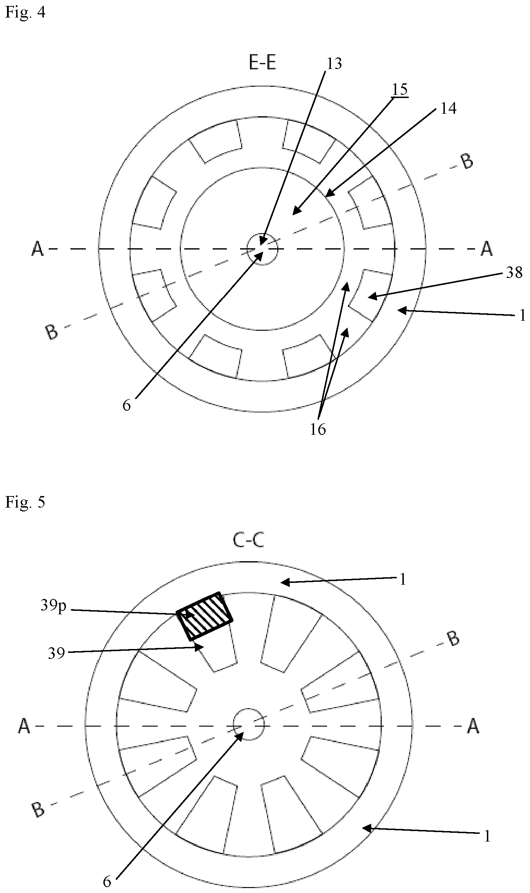

Fig. 4 shows a cross-section E-E of an exemplary embodiment of the device having center baffles 38 which extend up to the housing 1. As indicated, the cross-section A-A of Fig. 1 depicts a plane outside of center baffles 38, or the cross-section of an embodiment having a rotationally symmetrical device without center baffles 38. Fig. 4 shows that center baffles 38 preferably are arranged in the median plane 15 of the disc 10.

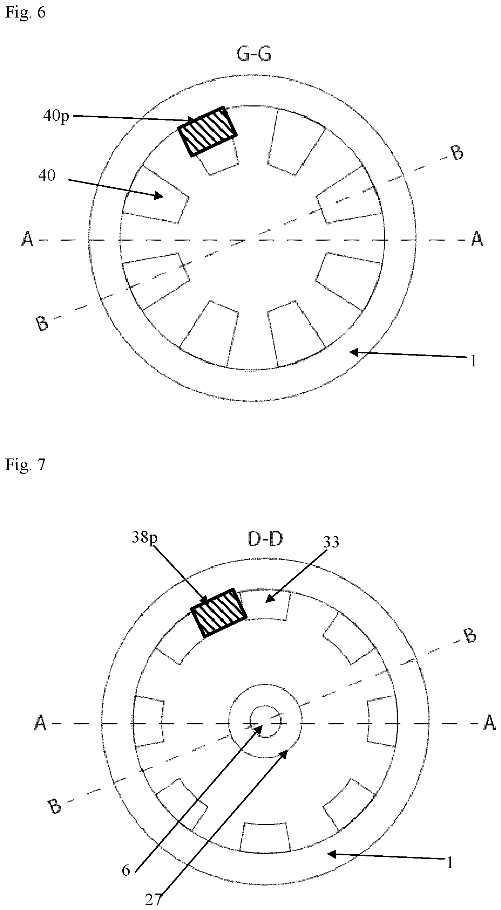

Optionally, the device has top baffles 39, which extend essentially radially to the axis of rotation 13 and extend between the first stator 21 and a constriction 37. Fig. 5 depicts a cross-section C-C, which is between constriction 37 and first stator 21, with top baffles 39 extending radially to the extended axis of rotation 13, herein forming a center axis. As depicted in Fig. 4, it is preferred that the top baffles 39 extend from the first stator 21 to the constriction 37. As preferred, the top baffles 39 extend from the housing 1, e.g. in that center baffle portions 39p are arranged adjacent the housing 1 and carry the top baffles 39. Fig. 6 in a cross-section G-G shows a preferred embodiment of bottom baffles 40 which comprise bottom baffle portions 40p extending up to the housing 1.

Further optionally as e.g. depicted in Fig. 6, the device has bottom baffles 40, which extend essentially radially to the axis of rotation 13 and extend between the second stator 22 and the bottom 2 of the housing 1. Bottom baffles 40 preferably extend radially from the housing 1 up to at maximum adjacent the opening 30 of the second stator 22, such that the bottom baffles 40 do not project beyond the second stator 22.

Fig. 6 in a cross-section G-G shows an exemplary embodiment of bottom baffles 40, which between them form a section of the second peripheral passage 34, discharging towards the open cross-section of the housing 1 between its optically transparent window 35 and the opening 30 of the second stator 22.

Fig. 7 in a cross-section D-D through the second edge 27 of the first stator 21 depicts the first passage 28, which is an annular gap by which the second edge 27 is spaced from the disc shaft 6. In this embodiment, center baffle portions 38p, e.g. webs, extend between the first stator 21 and the housing 1, forming a first peripheral passage 33 between center baffle portions 38p and between the center baffle portions 38p.

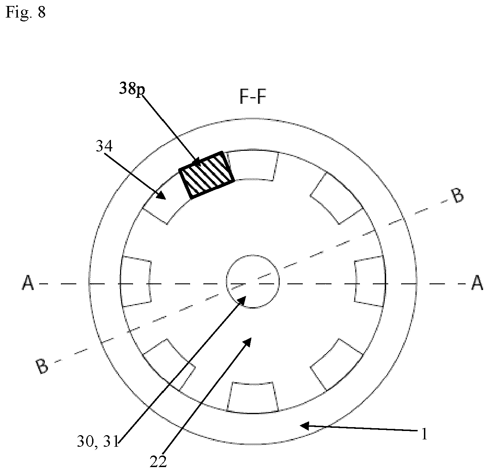

Fig. 8 in a cross-section F-F through the second edge 27 of the second stator 22 depicts the second passage 31 formed by an opening 30 of the second stator 22. Center baffle portions 38p extend between the second stator 22 and the housing, forming a second peripheral passage 34 between the center baffle portions 38p, the second stator 22 and the housing 1. Preferably, center baffles 38, top baffles 39 and bottom baffles 40 all extend along the same radials from the axis of rotation 13. The arrangement of center baffles 38, top baffles 39 and bottom baffles 40 in the same radials from the axis of rotation 13, e.g. arrangement of center baffles 38, top baffles 39 and bottom baffles 40 without radial offset, preferably may result in low turbulence in first and second peripheral passages 33, 34 and in turbulence within and adjacent to the radial passage 16, i.e. between and adjacent to the first projection 20 and the second projection 23 under the direct influence of the disc 10. Accordingly, a co-linear arrangement of center baffles 38, top baffles 39 and bottom baffles 40, i.e. without radial offset, allows for controlling the turbulence by rotating the disc 10 with little or no influence of the first and second peripheral passages 33, 34 on exerting stress on liquid passing through.

It was found that each of center baffles 38, preferably in combination, result in increased turbulence, especially within the radial passage 16 and/or in the connecting region of the radial passage 16 to the first peripheral passage 33 and to the second peripheral passage 34. For high stress on the liquid, the device preferably has no top baffles 39 and no bottom baffles 40, but e.g. a first peripheral passage 33 between the first stator 21 and the housing 1, and a second peripheral passage 34 between the second stator 22 and the housing 1, wherein in one or both peripheral passages 33, 34 no flow guiding element, e.g. no baffle is arranged.

In an embodiment, center baffles 38 arranged next to the central passage 16 are present, e.g. in order to increase turbulence in the flow of liquid. Additionally or alternatively, center baffles 38 adjacent to the side wall 4 may be arranged with a spacing from the rotor 10, e.g. in order to redirect the flow of liquid from parallel to perpendicular with reference to the median plane of the rotor. Each of center baffles 38 and top baffles 39 as well as combined center baffles 38 and top baffles 39 serve to align the liquid to flow between the baffles 38, 38 with low turbulence and high laminarity. In a preferred embodiment, top baffles 39 and peripheral center baffles 38 are contained in the device, because top baffles 39 and peripheral center baffles 38 when present together prevent vortex formation e.g in the region of escape volume 36 and dramatically reduce stress on the liquid outside of the radial passage 16. It is generally preferred that the device contains top baffles 39, optionally in combination with center baffles 38, as the top baffles 39 have the effect of decreasing the introduction of air through the constriction 37.

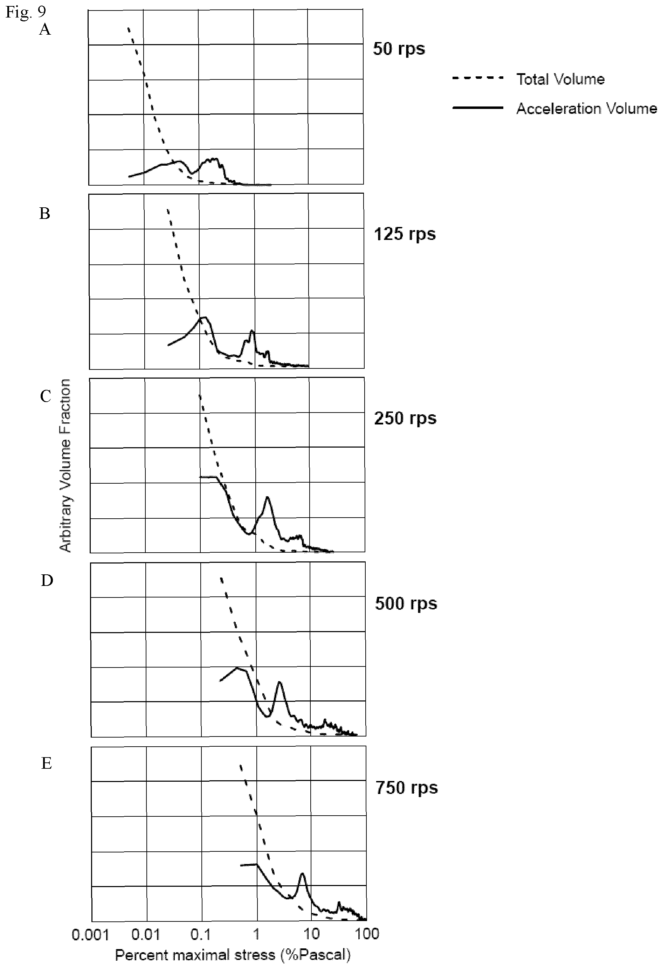

Fig. 9 shows results of computer-modelled liquid dynamics for stress intensities, which were calculated as Von-Mises-stress to include both turbulence and laminar stress. The computer-model used the structure of a device as shown in Fig. 1. It is shown that with increasing rotation speeds of the rotor from 50 rps (Fig. 9A), 125 rps (Fig. 9B), 250 rps (Fig. 9C), 500rps (Fig. 9D) to 750rps (Fig. 9E) results in the stress intensity being generated in the small volume of the accelerating volume, whereas only a low proportion stress intensity is generated in, or spread out through the total volume. Further, the results show that the process performed by the device generates a range of stress intensities within the acceleration volume.

**Reference signs:**

| | | | |
|---|---|---|---|
| 1 | housing | 34 | second peripheral passage |
| 2 | bottom of housing | 35 | optically transparent window |
| 3 | top end, lid | 36 | escape volume |
| 4 | side wall | 37 | constriction |
| 5 | bearing | 38 | center baffles |
| 5e | terminal extension | 38p | center baffle portions |
| 6 | rotor shaft | 39 | top baffle |
| 7 | terminal bearing | 39p | top baffle portion |
| 8 | recess | 40 | bottom baffle |
| 9 | coupling | 40p | bottom baffle portion |
| 10 | rotor | 41 | flow direction |
| 11 | first rotor surface | 100 | range of stress intensities |
| 12 | second rotor surface | 101 | core of stress intensity |
| 12a | tapering section | 102 | diffused stress intensity |
| 12b | central projection | 200 | interface |
| 13 | axis of rotation | | |
| 14 | circumferential edge of the rotor | | |
| 15 | median plane | | |
| 16 | radial passage | | |
| 20 | first projection | | |
| 21 | first stator | | |
| 22 | second stator | | |
| 23 | second projection | | |
| 24 | first edge of first stator | | |
| 25 | first edge of second stator | | |
| 26 | recess | | |
| 27 | second edge | | |
| 28 | first passage | | |
| 29 | first interspace | | |
| 30 | opening of the second stator | | |
| 31 | second passage | | |
| 32 | second interspace | | |
| 33 | first peripheral passage | | |

## Claims

1. Process for mixing of a total volume of liquid contained in a closed housing (1) by imparting to the liquid a range of stress intensities by accelerating the liquid through an accelerating volume section of the housing (1), after passage of the liquid through the accelerating volume section passing the liquid through static passages within the housing (1), adjacent the static passages passing the liquid between a rotating rotor (10) and a spaced-apart first stator (21) and opposite the first stator (21) passing the liquid between the rotor (10) and a second stator (22) spaced-apart from the rotor (10) and opposite the first stator (21), and returning the liquid to the accelerating volume section until the entire liquid volume is moved through the accelerating volume section, wherein the accelerating volume section includes a radial passage (16) extending in the plane of the circumferential edge of the rotor (10), which radial passage (16) is provided by the spacing of portions of the first and second stators (21, 22), the radial passage (16) extending from the rotor (10) towards the housing.

2. Process according to claim 1, **characterized in that** accelerating the liquid is by rotating a rotor (10) which is a disc arranged with a spacing from the radial passage (16) arranged with a radial spacing from the rotor (10).

3. Process according to one of the preceding claims, **characterized in that** the accelerating volume section is at maximum 5 % of the total liquid volume.

4. Process according to one of the preceding claims, **characterized in that** the range of stress intensities encompasses a range of intensities that vary by a factor of at least 5, the intensities being determined as turbulence values.

5. Process according to one of the preceding claims, **characterized in that** an escape volume (36) is arranged adjacent to and in fluid contact with the total liquid volume, wherein opposite a bottom (2) of the housing (1) a constriction (37) covering the cross-section of the inner volume of the housing (1) with a spacing from the first stator (21) and with a spacing from the rotor shaft (6) separates the escape volume (36) from the total liquid volume, such that an interface (200) between the liquid volume and gas is arranged only in the escape volume (36).

6. Process according to one of the preceding claims, **characterized by** irradiating light through an optically transparent window (35) contained in a bottom of the housing (1), directing light that is irradiated onto a surface (12) of the rotor (10) away from the window (35) by the surface (12) of the rotor (10) tapering to a central projection (12b), and receiving light through the window (35).

7. Process according to one of the preceding claims, **characterized in that** light that is irradiated through a window (35) of the bottom of the housing is irradiated onto a second surface (12) of the rotor (10) and is reflected from the second surface (12) of the rotor (10) towards the second stator (1) and/or to a housing section outside the window (35).

8. Process according to one of the preceding claims, **characterized in that** the range of stress intensities from lowest to highest intensity vary by a factor of at least 5, wherein the stress intensities are determined as Von-Mises-stress and wherein the Von-Mises-stress is determined by the rotation speed of the rotor (10) and the viscosity is the one of the liquid.

9. Process according to one of the preceding claims, **characterized by** comprising at least two cycles, each cycle comprising a stressing phase of rotating the rotor (10) to at least one speed of 100 to 1000 rps and a resting phase comprising rotating the rotor to a rate of at maximum 10% of the rotation rate of the stressing phase.

10. Process according to one of the preceding claims, **characterized in that** the liquid contains a native conformation prion protein and a biological sample suspected of containing an aggregated conformation prion protein.

11. Use of a device in a process according to one of the preceding claims, the device containing in a closed housing (1) a rotor (10) which is a disc, and radial passage (16) extending in the plane of the circumferential edge of the rotor (10), which radial passage (16) is provided by the spacing of portions of first and second stators (21, 22), the radial passage (16) extending from the rotor (10) towards the housing.
